# EUROPÄISCHE PATENTANMELDUNG

(11) **EP 4 491 797 A1**
(43) Veröffentlichungstag der Anmeldung: **15.01.2025**
(21) Anmeldenummer: 23184810.2
(22) Anmeldetag: 11.07.2023
(51) Int. Cl.: E01C 11/22, G01B 3/10

(54) **BANDWARE FÜR EINE LINEARENTWÄSSERUNGSVORRICHTUNG**

(71) Anmelder: Onorati, Loris, 6340 Baar (CH)
(72) Erfinder: Onorati, Loris, 6340 Baar (CH)
(74) Vertreter: EGLI-EUROPEAN PATENT ATTORNEYS

(57) **Zusammenfassung**

Eine Bandware dient für eine Linearentwässerungsvorrichtung, wobei sich die Linearentwässerungsvorrichtung (10) in einer Längsrichtung (L) über eine erste Länge erstreckt und eine Anzahl von Öffnungen (13) zur Aufnahme von Oberflächenwasser aufweist. Die Bandware (1) weist eine zweite Länge auf, die grösser als die erste Länge der Linearentwässerungsvorrichtung (10) ist, und die Bandware (1) ist ausgebildet, die Anzahl von Öffnungen (13) reversibel abzudecken, und umfasst zumindest eine magnetische Schicht (3).

## Beschreibung

Die vorliegende Erfindung betrifft eine Bandware für eine Linearentwässerungsvorrichtung, ein Linearentwässerungssystem mit der Bandware, und eine Verwendung der Bandware bzw. des Linearentwässerungssystems für den Einbau einer Linearentwässerungsvorrichtung.

Eine Linearentwässerungsvorrichtung dient zum Ableiten von Oberflächenwasser, wie z.B. Regenwasser oder Schmutzwasser, von Plätzen, Vorplätzen, Parkplätzen, Einfahrten, Flachdächer, Terrassen, Strassen, anderen, insbesondere versiegelten, Flächen, etc. Hierzu ist die Linearentwässerungsvorrichtung in den Untergrund eingebracht. Die Linearentwässerungsvorrichtung erstreckt sich entlang einer Längsrichtung über eine Länge, die grösser, vorzugsweise um ein Vielfaches grösser ist als eine Breite der Linearentwässerungsvorrichtung senkrecht zu ihrer Länge. Somit kann zur Flächenentwässerung Oberflächenwasser im Wesentlichen linear entlang der Länge der Linearentwässerungsvorrichtung aufgenommen und abgeleitet werden. Somit unterscheidet sich die Linearentwässerungsvorrichtung beispielsweise von einer punktuellen Entwässerungsvorrichtung, wie z.B. einer Schachtentwässerungsvorrichtung, bei der Oberflächenwasser im Wesentlichen punktuell bzw. über eine geringere Fläche, insbesondere einer kleineren Länge als bei der Linearentwässerungsvorrichtung, aufgenommen wird.

Hierzu kann die Linearentwässerungsvorrichtung aus mindestens einem, vorzugsweise einer Mehrzahl von in der Längsrichtung aneinandergereihten Einzelelementen, wie z.B. Entwässerungsrinnen bestehen, wobei jedes Einzelelement z.B. eine Länge von einem Meter aufweisen kann. Die Einzelelemente an den Enden der Linearentwässerungsvorrichtung werden beispielsweise auf eine gewünschte Länge geschnitten, um die gewünschte Gesamtlänge der Linearentwässerungsvorrichtung zu erhalten. Eine Entwässerungsrinne kann beispielsweise als eine Kastenrinne mit einer Rostabdeckung ausgebildet sein, oder als eine Schlitzrinne. Durch eine oder mehrere Öffnungen an der Oberseite der Linearentwässerungsvorrichtung kann das Oberflächenwasser aufgenommen werden, und durch einen Anschluss an die Kanalisation oder an ein Versickerungssystem abgeführt werden.

Der Einbau einer Linearentwässerungsvorrichtung in den Untergrund geschieht typischerweise in zwei Schritten: Zuerst werden auf einer vorbereiteten Ebene eines Platzes die Einzelelemente exakt auf eine vorbereitete Höhe eingebracht, z.B. indem sie in ihrem unteren Bereich einbetoniert oder in Sand eingebettet werden. Anschliessend wird der Platz auf die vorgesehene richtige Höhe mit einem Auffüllmaterial, z.B. Beton, Steinen, Kies oder Pflastersteinen, aufgefüllt. Insbesondere in dem zweiten Schritt des Auffüllens des Untergrunds kann es vorkommen, dass das Auffüllmaterial teilweise in die Einzelelemente gelangt und von dort möglicherweise sogar in die Kanalisation. Dies macht unerwünschte und aufwändige Reinigungsarbeiten der Einzelelemente erforderlich, bei der Verwendung von Beton als Auffüllmaterial oft sogar durch Spitzen.

EP 3 929 360 A1 beschreibt ein Schachtabdeckungssystem, das eine Schachtabdeckung aufweist sowie eine Magnetabdeckung zur Abdeckung einer einem Schacht abgewandten Seite der Schachtabdeckung. Die Magnetabdeckung ist derart ausgebildet, dass ihre Grösse im Wesentlichen der Grösse der dem Schacht abgewandten Seite der Schachtabdeckung entspricht. Somit betrifft EP 3 929 360 A1 insbesondere die Punktentwässerung zur Entwässerung einer Fläche.

Es ist daher Aufgabe, eine Bandware für eine Linearentwässerungsvorrichtung bereitzustellen, bzw. ein verbessertes oder alternatives Linearentwässerungssystem, bzw. eine verbesserte oder alternative Verwendung der Bandware bzw. des Linearentwässerungssystems, mit der/dem insbesondere ein vereinfachter Einbau der Linearentwässerungsvorrichtung möglich ist, insbesondere indem ein Eindringen von Auffüllmaterial durch Öffnungen an der Oberseite der Linearentwässerungsvorrichtung verhindert oder zumindest verringert werden kann.

Die Aufgabe wird gelöst durch eine Bandware gemäss Anspruch 1, ein Linearentwässerungssystem gemäss Anspruch 10, und eine Verwendung einer Bandware und/oder eines Linearentwässerungssystems gemäss Anspruch 13. Weiterbildungen der Erfindung sind in den abhängigen Ansprüchen angegeben. Die Verwendung der Bandware bzw. des Linearentwässerungssystems kann auch durch die untenstehenden bzw. in den Unteransprüchen angegebenen Merkmale der Bandware und des Linearentwässerungssystems weitergebildet sein, und umgekehrt. Die Merkmale der Bandware und des Linearentwässerungssystems können auch untereinander zur Weiterbildung genutzt werden.

Eine erfindungsgemässe Bandware ist geeignet zur Verwendung mit einer Linearentwässerungsvorrichtung, die sich in einer Längsrichtung über eine erste Länge erstreckt und eine Anzahl von Öffnungen zur Aufnahme von Oberflächenwasser aufweist. Die Bandware weist eine zweite Länge auf, die grösser als die erste Länge der Linearentwässerungsvorrichtung ist, und ist ausgebildet, die Anzahl von Öffnungen reversibel abzudecken. Die Bandware umfasst zumindest eine magnetische Schicht.

Vorzugsweise ist die magnetische Schicht ausgebildet, eine Magnetkraft zu erzeugen, mit der die Bandware in positionsfester Beziehung an der Linearentwässerungsvorrichtung haltbar ist. Hierzu ist die Linearentwässerungsvorrichtung vorzugsweise zumindest abschnittsweise metallisch ausgebildet, insbesondere an einer Oberseite der Linearentwässerungsvorrichtung, an der die Bandware anbringbar ist oder angebracht werden soll.

Der Begriff "Anzahl" wird hier im Sinne von "ein oder mehrere" verwendet.

Eine Linearentwässerungsvorrichtung erstreckt sich vorzugsweise entlang ihrer Längsrichtung über die erste Länge, welche grösser ist, vorzugsweise um ein Vielfaches grösser ist, als eine Breite der Linearentwässerungsvorrichtung senkrecht zur Längsrichtung. Somit kann beispielsweise zur Flächenentwässerung Oberflächenwasser im Wesentlichen linear entlang der Länge der Linearentwässerungsvorrichtung aufgenommen und abgeleitet werden.

Dadurch, dass die Bandware ausgebildet ist, die Öffnungen der Linearentwässerungsvorrichtung reversibel abzudecken, kann beispielsweise die Bandware nach Einbringen der Linearentwässerungsvorrichtung in den Untergrund wieder entfernt und wiederverwendet werden. Durch das Abdecken der Öffnungen kann beispielsweise verhindert werden, dass während des Einbaus der Linearentwässerungsvorrichtung in den Untergrund Material, beispielsweise Auffüllmaterial, in die Linearentwässerungsvorrichtung eindringt. Vorzugsweise bleibt die Abdeckung während der Bauphase auf der Linearentwässerungsvorrichtung, um zu verhindern, dass die Vorrichtung, das Grundwasser und die Kanalisation verschmutzt werden. Dadurch, dass die Länge der Bandware grösser ist als die Länge der Linearentwässerungsvorrichtung, kann die Bandware flexibel für Linearentwässerungsvorrichtungen unterschiedlicher Längen verwendet werden.

Vorzugsweise erstreckt sich die Anzahl von Öffnungen der Linearentwässerungsvorrichtung senkrecht zur Längsrichtung über eine maximale Breite, und die Bandware weist eine Breite senkrecht zur zweiten Länge auf, die mindestens der maximalen Breite der Anzahl von Öffnungen der Linearentwässerungsvorrichtung entspricht. Dadurch ist es beispielsweise möglich, die Öffnungen der Linearentwässerungsvorrichtung vollständig zu verdecken.

Vorzugsweise ist die Bandware zu einer Rolle aufgerollt bereitgestellt. Dadurch kann die Bandware beispielsweise auf einfache Art und Weise verwendet werden, beispielsweise durch Abwickeln der Rolle, und/oder platzsparend bevorratet werden.

Vorzugsweise weist die Bandware weiter ein sich über die zweite Länge erstreckendes Längenmass, insbesondere ein Zentimetermass, auf. Damit kann beispielsweise ein Ablängen bzw. Abschneiden der Linearentwässerungsvorrichtung auf eine gewünschte Gesamtlänge vereinfacht werden.

Vorzugsweise ist die magnetische Schicht zumindest abschnittsweise als Permanentmagnet und/oder Elektromagnet ausgebildet. Damit kann beispielsweise auf einfache Art und Weise eine Magnetkraft zum Halten bzw. Befestigen der Bandware an der Linearentwässerungsvorrichtung bereitgestellt sein.

Vorzugsweise ist die magnetische Schicht als eine Magnetfolie ausgebildet, die weiter bevorzugt eine Dicke von 0,5 mm bis 1,5 mm, besonders bevorzugt in etwa 0,75 mm aufweist. Alternativ oder zusätzlich liegt vorzugsweise eine durch die Bandware aufbringbare magnetische Haltekraft zwischen 20 bis 80 cN/cm², weiter bevorzugt zwischen 40 und 70 cN/cm², besonders bevorzugt zwischen 50 und 57 cN/cm² liegt. Alternativ oder zusätzlich weist vorzugsweise die magnetische Schicht der Bandware eine Remanenzflussdichte B_{R} von 150 bis 200 mT, insbesondere 170 bis 180 mT auf. Alternativ oder zusätzlich liegt vorzugsweise eine Koerzitivfeldstärke der magnetischen Schicht im Bereich von 100 bis 110 kA/m, und beträgt insbesondere etwa 103 kA/m. Die Angaben zur Haltekraft beziehen sich auf einen Luftspalt d = 0 mm und sind definiert als Abzugskräfte in cN/cm² senkrecht zur Auflagefläche.

Damit kann beispielsweise eine Bandware bereitgestellt sein, die einerseits eine ausreichend große Magnetkraft aufbringt zum Halten der Bandware in positionsfester Beziehung mit der Linearentwässerungsvorrichtung. Andererseits kann beispielsweise eine Magnetkraft bereitgestellt sein, welche ein, insbesondere manuelles, Lösen der Bandware von der Linearentwässerungsvorrichtung erlaubt.

Vorzugsweise umfasst die Bandware weiter zumindest eine Schutzfolie, vorzugsweise eine Kunststofffolie. Weiter bevorzugt ist die Schutzfolie auf einer der Linearentwässerungsvorrichtung abgewandten Seite der Bandware vorgesehen, wenn die Bandware an der Linearentwässerungsvorrichtung angebracht ist. Die Schutzfolie kann beispielsweise eine selbstklebende Folie sein. Dadurch ist die Schutzfolie auf einfache Art und Weise mit der magnetischen Schicht verbindbar. Die Schutzfolie kann beispielsweise die magnetische Schicht vor Beschädigungen schützen, was die Wiederverwendbarkeit der magnetischen Schicht bzw. der Bandware verbessern kann.

Vorzugsweise ist die Bandware wiederverwendbar. Mit anderen Worten ist die Bandware vorzugsweise als ein mehrfach verwendbarer Artikel ausgebildet. Alternativ dazu kann die Bandware als ein Einweg-Artikel ausgebildet sein.

Ein erfindungsgemässes Linearentwässerungssystem umfasst zumindest eine Linearentwässerungsvorrichtung, insbesondere eine Entwässerungsrinne, die sich in einer Längsrichtung über eine erste Länge erstreckt und eine Anzahl von Öffnungen zur Aufnahme von Oberflächenwasser aufweist, sowie eine oben beschriebene Bandware. Vorzugsweise ist die Anzahl von Öffnungen der Linearentwässerungsvorrichtung als eine Mehrzahl von sich quer zur Längsrichtung erstreckende Schlitze an einer Oberseite der Linearentwässerungsvorrichtung ausgebildet, vorzugsweise als Schlitze einer Abdeckung, insbesondere eines Rostes und/oder Gitters. Damit kann beispielsweise eine Linearentwässerungsvorrichtung in Form einer Kastenrinne mit einer Rostabdeckung bereitgestellt sein. Alternativ oder zusätzlich ist vorzugsweise die Anzahl von Öffnungen der Linearentwässerungsvorrichtung als ein sich in der Längsrichtung erstreckender Schlitz an einer Oberseite der Linearentwässerungsvorrichtung ausgebildet. Damit kann beispielsweise eine Linearentwässerungsvorrichtung in Form einer Schlitzrinne bereitgestellt sein. Vorzugsweise ist eine Oberseite der Linearentwässerungsvorrichtung zumindest abschnittsweise aus einem metallischen Material ausgebildet und/oder weist ein metallisches Material auf. Damit ist beispielsweise ein Entwässerungssystem bereitgestellt, das sich gut für den Einsatz der oben beschriebenen Bandware eignet, und insbesondere einen vereinfachten Einbau der Linearentwässerungsvorrichtung ermöglichen kann.

Eine erfindungsgemässe Verwendung einer oben beschriebenen Bandware und/oder eines oben beschriebenen Linearentwässerungssystems dient dem Einbau einer Linearentwässerungsvorrichtung, wobei sich die Linearentwässerungsvorrichtung in einer Längsrichtung über eine erste Länge erstreckt und eine Anzahl von Öffnungen zur Aufnahme von Oberflächenwasser aufweist, und umfasst zumindest folgende Schritte:
a) Einbringen der zumindest einen Linearentwässerungsvorrichtung in einem Untergrund, insbesondere durch Einbetonieren und/oder Einbetten in einem Einbettungsmaterial,
b) Anbringen der Bandware an einer Oberseite der Linearentwässerungsvorrichtung so, dass die Bandware zumindest die Anzahl von Öffnungen abdeckt, und
c) Auffüllen eines an die Linearentwässerungsvorrichtung angrenzenden Bereichs mit einem Auffüllmaterial.

Vorzugsweise werden im Schritt a) eine Mehrzahl von in der Längsrichtung aneinander anschliessenden Linearentwässerungsvorrichtungen in den Untergrund eingebracht, und weiter bevorzugt auf eine vorbestimmte Länge entlang der Längsrichtung gekürzt. Alternativ oder zusätzlich umfasst die Verwendung weiter einen Schritt des Ablösens der Bandware von der Linearentwässerungsvorrichtung, insbesondere durch Überwinden einer von der Bandware erzeugten magnetischen Kraft.

Weitere Merkmale und Zweckmässigkeiten der Erfindung ergeben sich aus der Beschreibung von Ausführungsbeispielen anhand der beigefügten Figuren.
- Fig. 1: zeigt eine schematische, perspektivische Ansicht einer Bandware gemäß einer Ausführungsform der vorliegenden Erfindung zur Verwendung mit einer Linearentwässerungsvorrichtung,
- Fig. 2: zeigt eine schematische Ansicht der in Fig. 1 gezeigten Bandware im Schnitt,
- Fig. 3a bis 3c: sind Ansichten, die schematisch die Verwendung der in Fig. 1 und 2 gezeigten Bandware beim Einbau einer Linearentwässerungsvorrichtung zeigen, wobei Fig. 3a eine schematische, perspektivische Ansicht der Linearentwässerungsvorrichtung zeigt, Fig. 3b einen ersten Schritt des Einbaus der Linearentwässerungsvorrichtung, und Fig. 3c einen weiteren Schritt des Einbaus der Linearentwässerungsvorrichtung.

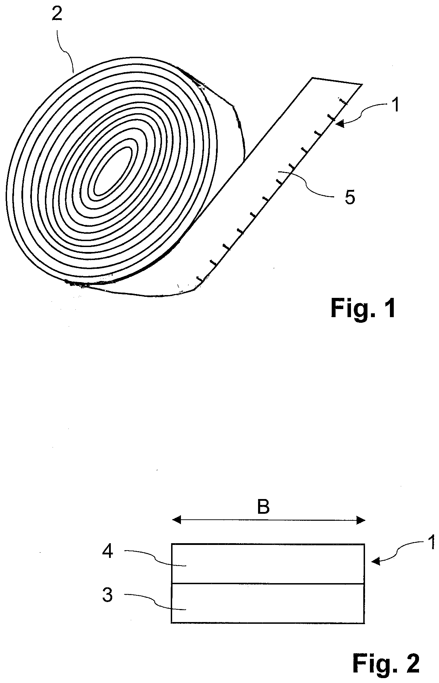

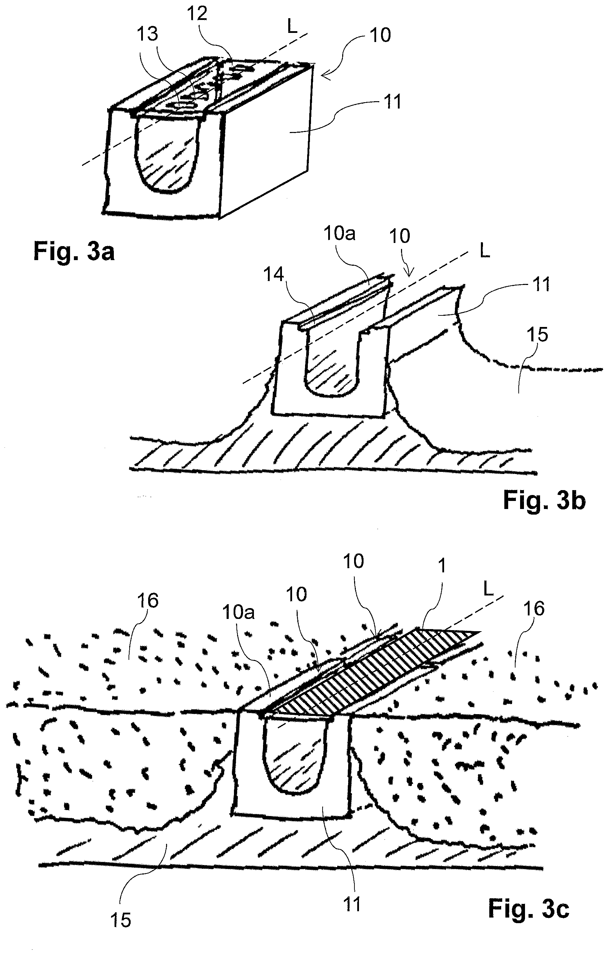

Im Folgenden wird mit Bezug auf Fig. 1 und 2 eine Bandware zur Verwendung mit einer Linearentwässerungsvorrichtung, beispielsweise einer Entwässerungsrinne (s. Fig. 3a-3c), beschrieben. Fig. 1 zeigt eine schematische Ansicht der Bandware 1, die entlang ihrer Länge zu einer Rolle 2 aufgerollt ist, und Fig. 2 zeigt eine schematische Ansicht der Bandware 1 im Schnitt, wobei eine Schnittebene senkrecht zur Längsrichtung der Bandware 1 verläuft.

Die Bandware 1 ist als ein Streifen mit konstanter Breite B ausgebildet, der sich entlang einer Längsrichtung L (s. Fig. 3c) über eine Länge erstreckt, die mindestens so gross wie bzw. grösser als die eine Länge der Linearentwässerungsvorrichtung (s. Fig. 3a-c) ist. In Fig. 1 ist die Bandware 1 entlang ihrer Längsrichtung zu einer Rolle 2 aufgerollt. Die Bandware 1 ist dazu ausgebildet, Öffnungen 13 einer Linearentwässerungsvorrichtung (s. Fig. 3a-c) reversibel abzudecken. Die Breite B der Bandware 1 entspricht mindestens der maximalen Breite der Öffnungen 13 der Linearentwässerungsvorrichtung (s. Fig. 3a, 3c).

Wie in Fig. 2 gezeigt, umfasst die Bandware 1 eine magnetische Schicht 3 und eine Schutzschicht in Form einer Schutzfolie 4. Die magnetische Schicht 3 ist an der Unterseite der Bandware 1 vorgesehen und die Schutzfolie 4 an der Oberseite, wenn die Bandware 1 an der Linearentwässerungsvorrichtung (s. Fig. 3a-c) angebracht ist. An der Oberseite der Bandware 1, d.h. der der Linearentwässerungsvorrichtung abgewandten Seite, ist eine sich entlang der Längsrichtung erstreckendes Längenmass 5 in Form eines Zentimetermasses vorgesehen.

Die magnetische Schicht 3 ist zumindest abschnittsweise als Permanentmagnet und/oder Elektromagnet ausgebildet. In vorliegender Ausführungsform ist die magnetische Schicht 3 als eine Magnetfolie ausgebildet. Beispielsweise kann die Magnetfolie eine Dicke von 0,5 mm bis 1,5 mm aufweisen. Beispielsweise weist die Magnetfolie eine Dicke von etwa 0,75 mm auf, wobei die Bandware 1 aus Magnetfolie 2 und Schutzfolie 4 beispielsweise eine Dicke bis 1,1 mm aufweist.

Bei einer Materialstärke von 0,75 mm weist die Magnetfolie 3 als semi-anisotrope Magnetfolie beispielsweise eine Haltekraft von 50 cN/cm² auf, und die Magnetfolie 3 als anisotrope Magnetfolie weist beispielsweise eine Haltekraft von 57 cN/cm² auf. Die Angaben zur Haltekraft beziehen sich auf einen Luftspalt d = 0 mm und sind definiert als Abzugskräfte in cN/cm² senkrecht zur Auflagefläche.

Die Magnetfolie 3 weist beispielsweise eine Remanenzflussdichte B_{R} von 179 mT, eine Koerzitivfeldstärke BHc von 103 kA/m, ein maximales Energieprodukt BH von 5,49 kJ/m³ bzw. 0,96 MGOe, eine Dichte von 3,6 g/m³ sowie eine Härte Shore D von 55 auf. Der maximale Temperatureinsatzbereich liegt beispielsweise bei -15°C bis + 80°C, kurzzeitig bis 180°C / 220°C. Die Polabstände liegen beispielsweise bei 2,1 mm und die Magnetfolie 3 ist sowohl ein- als auch zweiseitig mehrpolig und auf der Magnetseite mit Schutzlack beschichtet.

Die Magnetfolie 3 setzt sich in vorliegender Ausführungsform aus ca. 89% Bariumferrit bzw. Strontiumferrit, ca. 9,5% Kunststoffelastomeren, hier ohne PVC, und im Übrigen aus 1,5% Bindemitteln und Weichmachern zusammen.

Die Schutzfolie 4 besteht in vorliegender Ausführungsform aus einer PVC verschweissten Selbstklebefolie. Das Längenmass 5 kann beispielsweise an oder in der Schutzfolie 4 vorgesehen sein, beipielsweise in Form eines UV-Drucks.

Die Magnetfolie 3 und die Schutzfolie 4 können ein- oder mehrlagig ausgeführt sein. Auch können mehrere Magnetfolien 3 und Schutzfolien 4 hintereinander oder alternierend angeordnet sein. Die Magnetfolie 3 und/oder die Schutzfolie 4 kann chemie- und/oder hitzebeständig ausgebildet sein.

Im Folgenden wird mit Bezug auf Fig. 1 bis 3c eine Verwendung der oben beschriebenen Bandware 1 für den Einbau eine Linearentwässerungsvorrichtung beschrieben. Fig. 3a zeigt eine Linearentwässerungsvorrichtung in Form einer Entwässerungsrinne 10 für die Verwendung mit der Bandware 1. Die Linearentwässerungsvorrichtung kann auch mehrere der in Fig. 3a gezeigten Entwässerungsrinnen 10 umfassen.

Die in Fig. 3a gezeigte Entwässerungsrinne 10 erstreckt sich entlang einer Längsrichtung L über eine Länge, die kleiner ist als die Länge der Bandware 1. Sie umfasst eine Kastenrinne 11 mit einem im Wesentlichen rechteckigen Außenquerschnitt und einer U-förmigen, zur Oberseite 10a der Entwässerungsrinne 10 hin offenen Ausnehmung zur Aufnahme von Oberflächenwasser. Weiter umfasst die Entwässerungsrinne 10 eine Abdeckung 12, beispielsweise in Form eines Rostes oder Gitters, die eine Mehrzahl von sich quer zur Längsrichtung L erstreckenden Schlitzen 13 aufweist. Die Schlitze 13 bilden Öffnungen an der Oberseite 10a der Entwässerungsrinne 10, durch die Oberflächenwasser in die Ausnehmung der Kastenrinne 11 eindringen kann. Die Schlitze 13 weisen senkrecht zur Längsrichtung L eine maximale Breite auf (in den Figuren nicht gezeigt), die kleiner ist als die Breite B der Bandware 1 (s. Fig. 2). Somit sind die Schlitze 13 der Entwässerungsrinne 13 vollständig durch die Bandware 1 abdeckbar.

An der Unterseite der Entwässerungsrinne 10 können ein oder mehrere Auslässe zum Anschluss an die Kanalisation oder an ein Versickerungssystem zum Abführen des Oberflächenwassers vorgesehen sein (in den Figuren nicht gezeigt).

Die Abdeckung 12 ist aus einem metallischen Material gefertigt oder weist zumindest abschnittsweise ein metallisches Material auf. Alternativ oder zusätzlich kann die Entwässerungsrinne 10 an ihrer Oberseite 10a zumindest abschnittsweise ein metallisches Material aufweisen. Dadurch kann die Bandware 1 über die Magnetkraft der Magnetfolie 3 (s. Fig. 1, 2) an der Abdeckung 12 haften (s. Fig. 3c). Die Abdeckung 12 kann beispielsweise auf an der Oberseite 10a der Entwässerungsrinne 10 ausgebildeten Stufenabschnitten 14 (s. Fig. 3b) aufliegen und/oder daran befestigt sein, sodass die Abdeckung 12 im Wesentlichen eben mit der Oberseite 10a abschließt.

Fig. 3b zeigt einen ersten Schritt des Einbaus der Linearentwässerungsvorrichtung. Hierbei wird eine, vorzugsweise mehrere, der in Fig. 3a gezeigten Entwässerungsrinnen 10 in einen Untergrund eingebracht. Die Oberseite 10a der Entwässerungsrinne 10 ist dabei auf einer vorab festgelegten Höhe vorgesehen. In Fig. 3b ist lediglich eine Entwässerungsrinne 10 gezeigt, vorzugsweise werden jedoch mehrere in Längsrichtung L aneinander anschließende Entwässerungsrinnen 10 in den Untergrund eingebracht. Die Entwässerungsrinnen 10 werden dabei beispielsweise mit ihrem unteren Abschnitt in einem Einbettungsmaterial 15, wie z.B. Beton oder Sand, eingebettet bzw. einbetoniert.

In Fig. 3b ist das Einbetten einer einzelnen Entwässerungsrinne 10 in dem Einbettungsmaterial 15 gezeigt, wobei die Entwässerungsrinne 10 ohne die Abdeckung 12 (s. Fig. 3a) vorgesehen ist. Die Entwässerungsrinne 10 kann jedoch auch mit aufgesetzter Abdeckung 12 in den Untergrund eingebracht werden (in den Figuren nicht gezeigt).

Anschließend wird die Abdeckung 12 (s. Fig. 3a) an der Kastenrinne 11 angebracht und die Bandware 1 an der Abdeckung 12 angebracht. Die Bandware 1 wird dabei so an der Abdeckung 12 angebracht, dass die Längsrichtungen L der Bandware 1 und der Entwässerungsrinne 10 identisch sind, und so, dass die Magnetfolie 3 auf der der Abdeckung 12 zugewandten Seite der Bandware 1 vorgesehen ist. Durch die von der Magnetschicht 3 der Bandware 1 (s. Fig. 2) aufgebrachte Magnetkraft wird die Bandware in positionsfester Beziehung an der Abdeckung 12 gehalten. Die Bandware 1 deckt dabei die durch die Schlitze 13 der Abdeckung 12 gebildeten Öffnungen an der Oberseite 10a der Entwässerungsrinne 10 vollständig ab, wie in Fig. 3c gezeigt. In der Ansicht der Fig. 3c ist die Abdeckung 12 durch die Bandware 1 verdeckt.

Anschließend wird ein an die Linearentwässerungsvorrichtung, d.h. die Entwässerungsrinnen 10, angrenzenden Bereich mit einem Auffüllmaterial 16 aufgefüllt. Das Auffüllmaterial 16 wird vorzugsweise bis zu einer vorab festgelegten Höhe aufgefüllt, sodass es einen mit der Oberseite 10a der Entwässerungsrinnen 10 ebenerdig ausgebildeten Untergrund bildet, wie in Fig. 3c gezeigt. Das Auffüllmaterial 16 kann beispielsweise Beton, Steine, Kies und/oder Pflastersteine umfassen. Dadurch, dass die Bandware 1 während des Einbringens des Auffüllmaterials 16 auf der Abdeckung 12 vorgesehen ist und deren Öffnungen verdeckt, kann verhindert werden, dass Auffüllmaterial 16 in die Ausnehmung der Kastenrinne 11 eindringt. Durch die Schutzfolie 4 (s. Fig. 2) der Bandware 1 kann beispielsweise eine Beschädigung der Abdeckung 12 und/oder der Magnetfolie 3 der Bandware 1(s. Fig. 2) beim Auffüllen mit dem Auffüllmaterial 16 verhindert werden. In Fig. 3c sind rein beispielhaft zwei in der Längsrichtung L aneinander anschliessende Entwässerungsrinnen 10 der Linearentwässerungsvorrichtung gezeigt.

Vorzugsweise werden die an den in der Längsrichtung L an den Enden der Linearentwässerungsvorrichtung vorgesehenen Entwässerungsrinnen 10 gekürzt, beispielsweise abgeschnitten, um eine gewünschte Gesamtlänge der Linearentwässerungsvorrichtung zu erhalten. Die Länge der Bandware 1 ist vorzugsweise länger als die gewünschte Gesamtlänge der Linearentwässerungsvorrichtung. Das Längenmass 5 an der Oberseite der Bandware 1 (s. Fig. 1) kann das Kürzen der Linearentwässerungsvorrichtung auf die Gesamtlänge vereinfachen.

Nach dem Einbringen der Linearentwässerungsvorrichtung in den Untergrund und Auffüllen mit dem Auffüllmaterial 16 kann die Bandware 1 durch Überwinden der Magnetkraft wieder von der Abdeckung 12 abgelöst werden, beispielsweise manuell abgezogen werden. Die Bandware 1 kann anschließend wiederverwendet werden.

Die Bandware 1 und eine oder mehrere Entwässerungsrinnen 10 können in Form eines Linearentwässerungssystems bereitgestellt sein.

Anstelle der oben beschriebenen Entwässerungsrinne(n) 10 können auch eine Anzahl anderer geeigneter Elemente zur Linearentwässerung als Linearentwässerungsvorrichtung vorgesehen sein.

Beispielsweise kann die Linearentwässerungsvorrichtung in Form einer Schlitzrinne bereitgestellt sein, bei der die Anzahl von Öffnungen der Linearentwässerungsvorrichtung als eine Anzahl von sich in der Längsrichtung erstreckender Schlitze an der Oberseite der Linearentwässerungsvorrichtung ausgebildet ist.

Anstelle einer wiederverwendbaren Bandware kann die Bandware auch als ein Einweg-Artikel bereitgestellt sein.

Auch sind die hier beschriebenen Elemente und Komponenten der Bandware und der Linearentwässerungsvorrichtung nicht auf die oben beschriebenen und in den Figuren dargestellten Formen und Abmessungen beschränkt.

## Patentansprüche

1. Bandware für eine Linearentwässerungsvorrichtung, wobei sich die Linearentwässerungsvorrichtung (10) in einer Längsrichtung (L) über eine erste Länge erstreckt und eine Anzahl von Öffnungen (13) zur Aufnahme von Oberflächenwasser aufweist,
wobei die Bandware (1) eine zweite Länge aufweist, die grösser als die erste Länge der Linearentwässerungsvorrichtung (10) ist, und
wobei die Bandware (1) ausgebildet ist, die Anzahl von Öffnungen (13) reversibel abzudecken, und zumindest eine magnetische Schicht (3) umfasst.

2. Bandware nach Anspruch 1, wobei sich die Anzahl von Öffnungen (13) der Linearentwässerungsvorrichtung (10) senkrecht zur Längsrichtung (L) über eine maximale Breite erstrecken, und wobei die Bandware eine Breite (B) senkrecht zur zweiten Länge aufweist, die mindestens der maximalen Breite der Anzahl von Öffnungen (13) der Linearentwässerungsvorrichtung (10) entspricht.

3. Bandware nach Anspruch 1 oder 2, wobei die Bandware (1) zu einer Rolle (2) aufgerollt bereitgestellt ist.

4. Bandware nach einem der Ansprüche 1 bis 3, weiter aufweisend ein sich über die zweite Länge erstreckendes Längenmass (5), insbesondere ein Zentimetermass.

5. Bandware nach einem der Ansprüche 1 bis 4, wobei die magnetische Schicht (3) zumindest abschnittsweise als Permanentmagnet und/oder Elektromagnet ausgebildet ist.

6. Bandware nach einem der Ansprüche 1 bis 5, wobei die magnetische Schicht (3) als eine Magnetfolie ausgebildet ist, die vorzugsweise eine Dicke von 0,5 mm bis 1,5 mm, besonders bevorzugt in etwa 0,75 mm aufweist.

7. Bandware nach einem der Ansprüche 1 bis 6, wobei eine durch die Bandware (1) aufbringbare magnetische Haltekraft zwischen 20 bis 80 cN/cm², bevorzugt zwischen 40 und 70 cN/cm², besonders bevorzugt zwischen 50 und 57 cN/cm² liegt und/oder
wobei die magnetische Schicht eine Remanenzflussdichte B_{R} von 150 bis 200 mT, insbesondere 170 bis 180 mT aufweist und/oder
wobei eine Koerzitivfeldstärke der magnetischen Schicht im Bereich von 100 bis 110 kA/m liegt, insbesondere etwa 103 kA/m beträgt.

8. Bandware nach einem der Ansprüche 1 bis 7, weiter umfassend zumindest eine Schutzfolie (4), vorzugsweise eine Kunststofffolie.

9. Bandware nach einem der Ansprüche 1 bis 8, wobei die Bandware (1) wiederverwendbar ist.

10. Linearentwässerungssystem, umfassend zumindest eine Linearentwässerungsvorrichtung, insbesondere eine Entwässerungsrinne (10), die sich in einer Längsrichtung (L) über eine erste Länge erstreckt und eine Anzahl von Öffnungen (13) zur Aufnahme von Oberflächenwasser aufweist, und eine Bandware nach einem der Ansprüche 1 bis 9.

11. Linearentwässerungssystem nach Anspruch 10, wobei die Anzahl von Öffnungen (13) der Linearentwässerungsvorrichtung als eine Mehrzahl von sich quer zur Längsrichtung erstreckende Schlitze an einer Oberseite der Linearentwässerungsvorrichtung ausgebildet ist, vorzugsweise als Schlitze einer Abdeckung, insbesondere eines Rostes und/oder Gitters, und/oder
wobei die Anzahl von Öffnungen der Linearentwässerungsvorrichtung als ein sich in der Längsrichtung erstreckender Schlitz an einer Oberseite der Linearentwässerungsvorrichtung ausgebildet ist.

12. Linearentwässerungssystem nach Anspruch 10 oder 11, wobei eine Oberseite (10a) der Linearentwässerungsvorrichtung (10) zumindest abschnittsweise aus einem metallischen Material ausgebildet ist und/oder ein metallisches Material aufweist.

13. Verwendung einer Bandware (1) nach einem der Ansprüche 1 bis 9 und/oder eines Linearentwässerungssystems nach einem der Ansprüche 10 bis 12 für den Einbau einer Linearentwässerungsvorrichtung (10), wobei sich die Linearentwässerungsvorrichtung (10) in einer Längsrichtung (L) über eine erste Länge erstreckt und eine Anzahl von Öffnungen (13) zur Aufnahme von Oberflächenwasser aufweist,
umfassend zumindest folgende Schritte:
a) Einbringen der zumindest einen Linearentwässerungsvorrichtung (10) in einem Untergrund, insbesondere durch Einbetonieren und/oder Einbetten in einem Einbettungsmaterial (15),
b) Anbringen der Bandware (1) an einer Oberseite (10a) der Linearentwässerungsvorrichtung (10) so, dass die Bandware (1) zumindest die Anzahl von Öffnungen (13) abdeckt, und
c) Auffüllen eines an die Linearentwässerungsvorrichtung (10) angrenzenden Bereichs mit einem Auffüllmaterial (16).

14. Verwendung nach Anspruch 13, wobei im Schritt a) eine Mehrzahl von in der Längsrichtung (L) aneinander anschliessenden Linearentwässerungsvorrichtungen (10) in den Untergrund eingebracht werden, und vorzugsweise auf eine vorbestimmte Länge entlang der Längsrichtung gekürzt werden.

15. Verwendung nach Anspruch 13 oder 14, weiter umfassend einen Schritt des Ablösens der Bandware (1) von der Linearentwässerungsvorrichtung (10), insbesondere durch Überwinden einer von der Bandware (1) erzeugten magnetischen Kraft.
